Europäisches Patentamt

European Patent Office

Office européen des brevets

(19)

(11) Veröffentlichungsnummer: **0 272 377 B1**

## (12) EUROPÄISCHE PATENTSCHRIFT

(45) Veröffentlichungstag der Patentschrift: **30.10.91**

(51) Int. Cl.⁵: **C01B 21/06, C01B 31/30**

(21) Anmeldenummer: **87112289.1**

(22) Anmeldetag: **25.08.87**

(54) **Verfahren und Vorrichtung zur thermischen und/oder reduzierenden Behandlung von festen, körnigen und/oder agglomerierten Einsatzmaterialien.**

(30) Priorität: **22.12.86 DE 3644057**

(43) Veröffentlichungstag der Anmeldung:
**29.06.88 Patentblatt 88/26**

(45) Bekanntmachung des Hinweises auf die
Patenterteilung:
**30.10.91 Patentblatt 91/44**

(84) Benannte Vertragsstaaten:
**BE DE FR GB IT LU NL**

(56) Entgegenhaltungen:
**US-A- 2 149 939**
**US-A- 2 839 366**
**US-A- 2 840 458**
**US-A- 3 348 915**
**US-A- 4 441 920**

(73) Patentinhaber: **VEREINIGTE ALUMINIUM-WERKE AKTIENGESELLSCHAFT**
**Berlin - Bonn Postfach 2468 Georg-von-Boeselager-Strasse 25**
**W-5300 Bonn 1(DE)**

(72) Erfinder: **Wilkening, Siegfried, Dr.-Ing.**
**Waldstrasse 17**
**W-5305 Alfter-Oedekoven(DE)**

(74) Vertreter: **Müller-Wolff, Thomas, Dipl.-Ing.**
**Vereinigte Aluminium-Werke AG Georg-von-Boeselager-Strasse 25 Postfach 2468**
**W-5300 Bonn 1(DE)**

**Beschreibung**

Verfahren und Vorrichtung zur thermischen und/oder reduzierenden Behandlung von festen, körnigen und/oder agglomerierten Einsatzmaterialien.

Die Erfindung betrifft ein Verfahren zur thermischen und/oder reduzierenden Behandlung von festen, körnigen und/oder agglomerierten Einsatzmaterialien bei Temperaturen bis zu 3500 °C in einer zu einer Kette verbundenen Grafittiegeln, die einen Ofenraum in vertikaler Richtung durchlaufen.

Gegenstand des Verfahrens ist insbesondere die kontinuierliche Herstellung von Carbiden und Nitriden des Bors, Aluminiums und Siliziums sowie die Herstellung der Carbide, Nitride und Boride der Übergangsmetalle der IV., V. und VI. Nebengruppe des Periodensystems, nämlich der Elemente Ti, Zr, V, Nb, Ta, Cr, Mo und W. Das Verfahren erstreckt sich auch auf Mischungen der Carbide, Nitride und Botride der genannten Elemente. Ein weiteres bevorzugtes Ziel des Verfahrens ist die kontinuierliche Herstellung der erwähnten Carbide, Nitride und Boride durch carbothermische Reduktion aus ihren reinen Oxiden bzw. Oxidgemischen.

Es ist bekannt, Grafittiegel in geschlossener Kette durch Ofenräume zu schieben. Dabei wurde allgemein der horizontale Durchschub dem vertikalen vorgezogen. Die Tiegel werden nach den bekannten Verfahren indirekt beheizt und sind nicht von Koksgranulat umgeben. Eine solche Verfahrensweise hat folgende Nachteile: Erreichbare Temperaturhöhe und anwendbare Tiegelgröße sind begrenzt. Die Grafittiegel müssen unter Schutzatmosphäre gehalten und durch Schleusen ein- und ausgefahren werden. Trotzdem leiden sie unter erhöhtem Verschleiß. Für die indirekte Tiegelbeheizung und ungeschützte Wärmeabstrahlung wird viel Energie benötigt. Außerdem wird die Abkühlwärme der Tiegel und Charge nicht für ihre Aufheizung genutzt.

Aufgabe der Erfindung ist es, die beschriebenen Nachteile zu vermeiden und ein Verfahren sowie eine Vorrichtung zur thermischen und/oder reduzierenden Behandlung von festen, körnigen und/oder agglomerierten Einsatzmaterialien, insbesondere zur kontinuierlichen Erzeugung hochschmelzender refraktärer Carbide, Nitride und Boride anzugeben, das eine frei wählbare Aufheizgeschwindigkeit auf beliebige Temperaturniveaus erlaubt, die je nach Art des herzustellenden Materials bevorzugt zwischen 1500 und 3000 °C liegen. Die Lösung der Aufgabe erfolgt durch die in den Patentansprüchen angegebenen Merkmale.

Zu den signifikanten Merkmalen des erfindungsgemäßen Verfahrens zählt nicht allein die kontinuierliche Duchführung verschiedener Hochtemperatur-Reduktionsprozesse mit festen Austragsprodukten, sondern vor allem die beträchtliche Energieeinsparung für die Gewinnung der in Rede stehenden Carbide, Nitride und Boride, die große Umweltfreundlichkeit des Verfahrens mit äußerst niedrigen Emissionswerten bei vergleichsweise geringem technischem Aufwand, die gute Regelung und Konstanthaltung der hohen Temperaturen oberhalb 2000 °C sowie die Erzeugung eines wertvollen Hochtemperatur-Kokskalzinats als Nebenprodukt.

Das Prinzip des Verfahrens besteht im wesentlichen darin, daß aufeinandergesetzte Grafittiegel in Form eines Stranges in vertikaler Richtung von unten nach oben durch einen Ofen geschoben werden. Diesem Strang wird durch Grafitelektroden im oberen und unteren Teil des Ofens Strom zugeführt, der den Strang überwiegend durchfließt und ihn auf diese Weise durch Widerstandswärme erhitzt. Der Tiegelstrang ist innerhalb des Ofenraumes von einem granularen Koksmaterial umgeben, das sich in entgegengesetzte Richtung zum Strang von oben nach unten bewegt. Das Koksmaterial erfüllt dreierlei Funktionen; Es dient dem Wärmeaustausch in der oberen und unteren Ofenzone, es überträgt den Strom gleichmäßig von den oberen und unteren Stromzuführungselektroden auf den Tiegelstrang und es stellt im mittleren Hochtemperaturabschnitt des Ofens ein temperaturresistentes Wärmeisolationsmaterial dar.

Die Ausgangsstoffe, z.B. Mischungen aus Oxid und Reduktionskohlenstoff, werden in die Grafittiegel gefüllt. Die Tiegel mit den Reaktanden werden unterhalb des Ofens an den Strang angesetzt. Die Tiegel mit den Produkten werden oberhalb des Ofens vom Strang abgenommen.

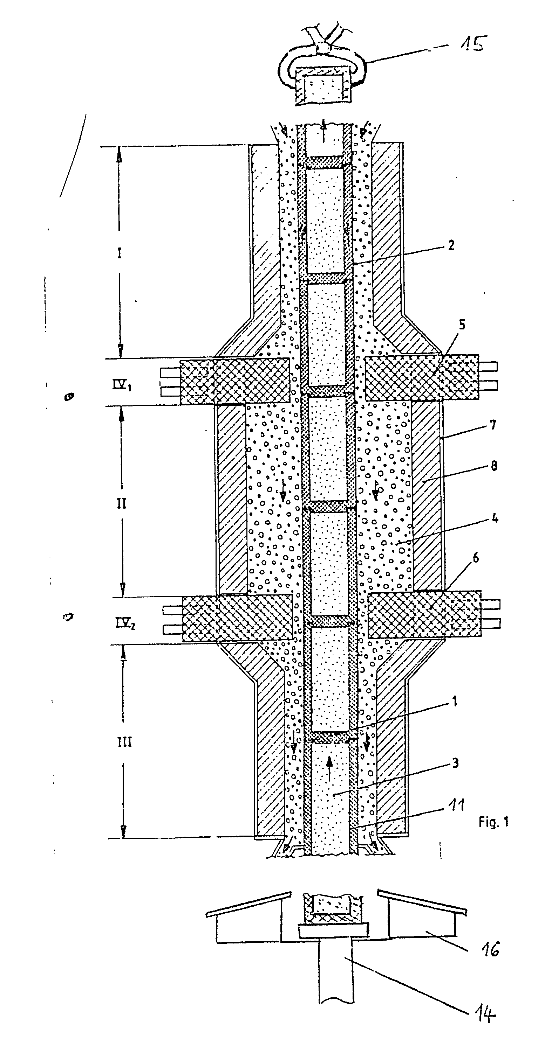

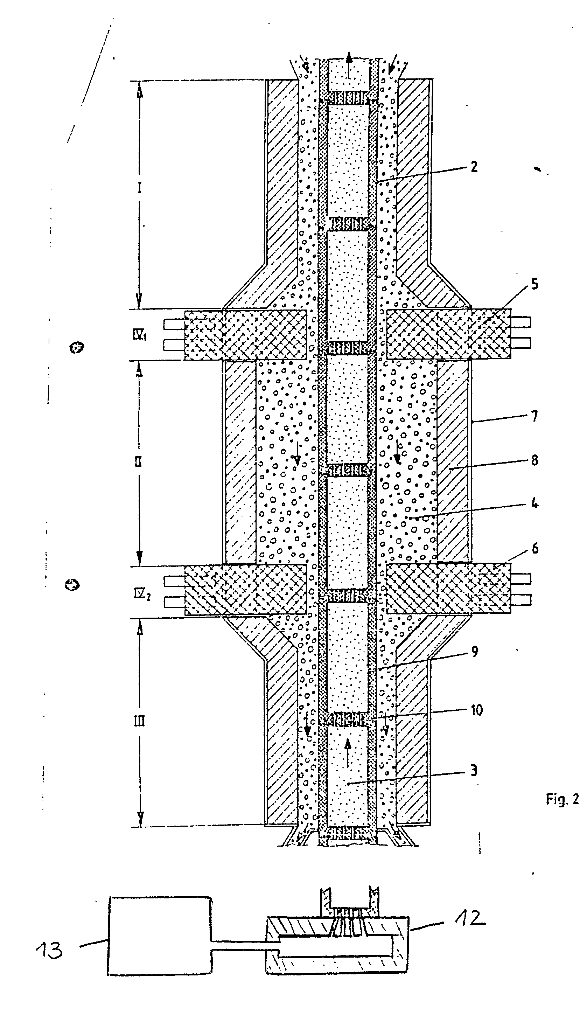

Das Verfahren sei anhand der Figuren 1und 2 näher erläutert. Fig. 1 zeigt als Ausführungsbeispiel im Vertikalschnitt einen Hochtemperaturreaktor zur Durchführung des erfindungsgemäßen Verfahrens. Die Grafittiegel 1 sind zu dem vertikalen Strang 2 zusammengesetzt. Sie werden durch eine Hubvorrichtung 14 unterhalb des Ofens kontinuierlich nach oben bewegt. Beim Untersetzen eines neuen Tiegels wird der Strang kurzzeitig von einer Klammer 15 gehalten. Die Grafittiegel sind mit dem Reaktionsgemisch 3 oder dem thermisch zu behandelnden Einsatzgut 3 gefüllt. Dem Tiegelstrang 2 entgegen durchfließt unter Schwerkrafteinwirkung ein körniges Kohlenstoffmaterial 4, z.B. Anthrazit oder Petrolkoks, den Ofenraum. Die Durchflußmenge an körnigem Kohlenstoffmaterial wird durch die Austragvorrichtung 16, z.B. durch Vibrationsrinnen, geregelt.

Der Tiegelstrang 2 mit dem Einsatzgut 3 und die Kokskörnung 4 durchwandern die vier Zonen I, II, III und IV des Ofens. In der Wärmeaustauschzone III werden die Grafittiegel 1 und die Charge 3 durch das

2

hocherhitzte Koksgranulat 4 vorgewärmt. In der mittleren Reaktionszone II werden die höchsten Temperaturen erreicht. Der Heizstrom wird auf die Tiegelstrang 2 in den Stromübertragungszonen $IV_1$ und $IV_2$ zugefuhrt. In der Wärmeaustauschzone I wird der Tiegelstrang 2 durch die oben kalt aufgegebene Kokskörnung 4 abgekühlt. Die Austrittstemperatur der Tiegel 1 liegt unter 400 °C, so daß für den Tiegelinhalt keine Oxidationsgefahr in der Luft besteht. Die beabsichtigte Reaktion, z.B. die Reduktion der Oxide zu ihren Carbiden, vollzieht sich in der Hochtemperaturzone II. Das Reaktionsgas CO entweicht durch die etwas poröse Grafittiegelwandung. In der Wärmeaustauschzone I gelangt das Reaktionsprodukt unter geschützten Bedingungen, d.h. in reduzierender Atmosphäre zur Abkühlung.

Der elektrische Strom (Wechsel- oder Gleichstrom) wird über die oberen Elektroden 5 und die unteren Elektroden 6 zu bzw. abgeführt. Das Ofengehäuse besteht aus einem wassergekühlten Stahlmantel 7 und einer feuerfesten Auskleidung 8. Die Wärmeasutauschzonen I und III sind im Durchmesser, wie aus Fig. 1 ersichtlich, enger gehalten als die mittleren Hochtemperatur- und Erhitzungsabschnitte II und IV. Stromstärke, Durchschubgeschwindigkeit des Tiegelstranges und Durchflußmenge des körnigen Kohlenstoffmaterials sind die variablen Betriebsparameter und bestimmen die maximale Temperaturhöhe und Verweilzeit des Einsatzgutes. Die Grafittiegel sind in der Regel für eine Vielzahl von Durchläufen verwendbar.

Fig. 2 stellt eine Variante des gemäß Fig. 1 beschriebenen Ver-fahrens dar. Die Grafittiegel 9 enthalten Böden 10 mit den Löchern . Die Grafittiegel mit Lochboden 10 eröffnen die Möglichkeit, die Innenräume der Tiegel 9 über die gesamte Stranglänge mit einem Gas zu durchspülen. Die Gaseinleitung in den Tiegelstrang wird in der Weise bewerkstelligt, daß sich der jeweils unterste Grafittiegel 11 auf einen dem Tiegelboden angepaßten hohlen Stahluntersatz 12 stützt, der an eine Gasversorgung 13 angeschlossen ist. Wird beispielsweise Stickstoff eingeleitet, können bei entsprechender Bemessung des Reduktionskohlenstoffs Nitride oder Carbonitride erzeugt werden. Ein gewisser Stickstoffüberschuß sorgt dafür, daß die Nitride auch in einer $N_2$-Atmosphäre abkühlen. Die Spülung des Tiegelstranges mit einem Edelgas, beispielsweise mit Argon, wird vorgesehen, wenn eine Reoxidation empfindlicher Produkte vermieden oder spezielle Carburierungs- oder Sinterprozesse durchgeführt werden sollen. Eine Begasung der Tiegelinnenräume mit einem von unten eingeleiteten Reaktions- oder Edelgas setzt voraus, daß das Einsatzgut u- oder duchströmbar ist, z. B. in stückiger oder grobkörniger Form in die Tiegel gegeben wird. Eine präzise Fertigung der ineinandergeschachtelten Grafittiegel, der Gewichtsdruck in der Säule und die freie Ausrichtbarkeit des Tiegelstranges verhindern, daß nennenwerte Mengen des Spülgases aus dem Stranginnenraum seitlich entweichen.

Im folgenden sind als Beispiele einige Umsetzungen angegeben, die in dem erfindungsgemäßen Reaktor erfolgreich durchgeführt wurden:

## Carbothermische Reduktion mit Carbidbildung

<div align="right">

Temperaturbereich
°C
</div>

$$2B_2O_3 + 7C = B_4C + CO \qquad 2000 - 2200$$
$$2Al_2O_3 + 9C = Al_4C_3 + 6CO \qquad 1900 - 2100$$
$$SiO_2 + 3C = SiC + 2CO \qquad 1900 - 2100$$
$$TiO_2 + 3C = TiC + 2CO \qquad 2700 - 3200$$
$$ZrO_2 + 3C = ZrC + 2CO \qquad 2800 - 3300$$
$$WO_3 + 4C = WC + 3CO \qquad 2300 - 2500$$

## Carbothermische Reduktion mit Nitridbildung

$$B_2O_3 + 3C + N_2 = 2BN + 3CO \qquad 2300 - 2500$$
$$Al_2O_3 + 3C + N_2 = 2AlN + 3CO \qquad 1900 - 2100$$
$$3SiO_2 + 6C + 2N_2 = Si_3N_4 + 6CO \qquad 1700 - 1800$$
$$2TiO_2 + 4C + N_2 = 2TiN + 4CO \qquad 2500 - 2700$$
$$2ZrO_2 + 4C + N_2 = 2ZrN + 4CO \qquad 2500 - 2700$$

## Carbothermische Reduktionmit Boridbildung

$$TiO_2 + B_2O_3 + 5C = TiB_2 + 5CO \qquad 2300 - 2600$$

## Carburierung + Sinterung

$$W + C = WC \qquad 2000 - 2300$$
$$3W + 2C = W_2C + WC \qquad 2700 - 3000$$

Zur Messung der Temperaturen in den Grafittiegeln wurde ein Indikatormaterial durch den Vertikalstrang hindurchgeschickt. Das Induktormaterial besteht aus kalziniertem Petrolkoks der Kornfraktion 2 - 4 mm. An dem Petrolkoks wurde in separaten Laborversuchen die Abhängigkeit seines spezifischen elektrischen Widerstandes von der Temperaturbehandlung ermittelt. An dem Indikatormaterial Petrolkoks wird also nach dem Versuch der spezifische elektrische Widerstand gemessen und aus der vorhandenen Eichkurve die zugehörige Temperatur abgelesen.

**Patentansprüche**

1. Verfahren zur thermischen und/oder reduzierenden Behandlung von festen, körnigen und/oder agglomerierten Einsatzmaterialien bei Temperaturen bis zu 3500 °C in einer zu einer Kette verbundenen Grafittiegeln, die einen Ofenraum in vertikaler Richtung durchlaufen, dadurch gekennzeichnet, daß das Einsatzmaterial in einem elektrisch direkt beheizten Vertikalstrang aus aufeinandergesetzten Grafittiegeln erhitzt wird, wobei sich die Grafittiegel von unten nach oben durch mehrere Ofenzonen bewegen und von einem im Gegenstrom fließenden körnigem Kohlenstoffmaterial umgeben werden.

2. Verfahren nach Anspruch 1, dadurch gekennzeichnet, daß die Grafittiegel in Bewegungsrichtung folgende Ofenzonen durchlaufen:

Zone für den Wärmeaustausch zwischen erhitztem, körnigem Kohlenstoffmaterial und den kalten, aufzuheizenden Grafittiegeln,

Zone der direkten Stromerhitzung mit Stromübertragung von den Elektroden über das Koksgranulat auf die Grafittiegel,

Zone für den Wärmeaustausch zwischen den erhitzten, abzukühlenden Grafittiegeln und der kalt aufgegebenen Kokskörnung.

3. Verfahren nach einem der vorhergehenden Ansprüche, dadurch gekennzeichnet, daß das in der Reaktionszone entweichende Reaktionsgas durch die poröse Grafittiegelwandung entweicht und nach oben aus dem Strom des körnigen Kohlenstoffmaterials abgezogen wird.

4. Verfahren nach einem der vorhergehenden Ansprüche, dadurch gekennzeichnet, daß die thermische Behandlung durch Wahl der Stromstärke, der Durchschubgeschwindigkeit des Tiegelstranges und der Durchflußmenge des körnigen Kohlenstoffmaterials geregelt wird.

5. Verfahren nach einem der vorhergehenden Ansprüche, dadurch gekennzeichnet, daß die Tiegelreaktionsgase von unten nach oben in vertikaler Richtung durch den Strang geleitet werden.

6. Verfahren nach einem der vorhergehenden Ansprüche, dadurch gekennzeichnet, daß die Tiegelinnenräume mit einem Edelgas zur Vermeidung von Oxidation gespült werden.

7. Verfahren nach einem der vorhergehenden Ansprüche, dadurch gekennzeichnet, daß in den Tiegeln eine carbothermische Reaktion folgender Stoffe stattfindet:

|  | Temperaturbereich $^\circ$C |
|---|---|
| $2B_2O_3 + 7C = B_4C + CO$ | 2000 - 2200 |
| $2Al_2O_3 + 9C = Al_4C_3 + 6CO$ | 1900 - 2100 |
| $SiO_2 + 3C = SiC + 2CO$ | 1900 - 2100 |
| $TiO_2 + 3C = TiC + 2CO$ | 2700 - 3200 |
| $ZrO_2 + 3C = ZrC + 2CO$ | 2800 - 3300 |
| $WO_3 + 4C = WC + 3CO$ | 2300 - 2500 |

8. Verfahren nach einem der vorhergehenden Ansprüche, dadurch gekennzeichnet, daß in die Tiegel ein stückiges oder grobkörniges Einsatzgut folgender Stoffe eingefüllt wird:

|  | Temperaturbereich $^\circ$C |
|---|---|
| $B_2O_3 + 3C + N_2 = 2BN + 3CO$ | 2300 - 2500 |
| $Al_2O_3 + 3C + N_2 = 2AlN + 3CO$ | 1900 - 2100 |
| $3SiO_2 + 6C + 2N_2 = Si_3N_4 + 6CO$ | 1700 - 1800 |
| $2TiO_2 + 4C + N_2 = 2TiN + 4CO$ | 2500 - 2700 |
| $2ZrO_2 + 4C + N_2 = 2ZrN + 4CO$ | 2500 - 2700, |

wobei der Stickstoff die Tiegel von unten nach oben in vertikaler Richtung durchströmt.

9. Verfahren nach einem der vorhergehenden Ansprüche, dadurch gekennzeichnet, daß zur Herstellung von Nitriden oder Carbonitriden in der Abkühlzone der Grafittiegel ein Stickstoffüberschuß in den Tiegeln aufrechterhalten wird.

10. Verfahren nach einem der vorhergehenden Ansprüche, dadurch gekennzeichnet, daß in den Tiegeln eine Boridbildung nach folgender Gleichung erfolgt:

|  | Temperaturbereich $^\circ$C |
|---|---|
| $TiO_2 + B_2O_3 + 5C = TiB_2 + 5CO$ | 2300 - 2600 |

**11.** Verfahren nach einem der vorhergehenden Ansprüche, dadurch gekennzeichnet, daß eine gleichzeitige Carburierung und Sinterung in den Tiegeln nach folgenden Gleichungen erfolgt:

|  | Temperaturbereich $^\circ$C |
|---|---|
| $W + C = WC$ | 2000 - 2300 |
| $3W + 2C = W_2C + WC$ | 2700 - 3000 |

**12.** Verfahren nach einem der vorhergehenden Ansprüche, dadurch gekennzeichnet, daß in die Grafittiegel ein Indikatormaterial aus kalziniertem Petrolkoks der Kornfraktion 2-4 mm gegeben, dessen spezifischer elektrischer Widerstand nach dem Versuch gemessen und zur Temperatureinstellung verwendet wird.

**13.** Vorrichtung zur thermischen und/oder reduzierenden Behandlung von festen, körnigen und/oder agglomerierten Einsatzmaterialien bei Temperaturen bis zu 3500 $^\circ$C in zu einer Kette verbundenen Grafittiegeln, die in einem aus mehreren Ofenzonen bestehenden Ofenraum in vertikaler Richtung angeordnet sind, dadurch gekennzeichnet, daß die Beheizung (1,9) in dem Vertikalstrang (2) durch seitlich am Umfang angeordnete, den Grafittiegelstrang nicht berührende Grafitelektroden (5, 6) erfolgt, die über ein körniges Kohlenstoffmaterial (4) mit den Grafittiegeln (1, 9) in elektrischem Kontakt stehen.

**14.** Vorrichtung nach einem der vorhergehenden Ansprüche, dadurch gekennzeichnet, daß die Elektroden (5, 6) in der mittleren Reaktionszone II des Ofenraums angeordnet sind und dieser im Durchmesser größer gehalten ist als die jeweils angrenzenden Wärmeaustauschzonen I bzw. III.

**15.** Vorrichtung nach einem der vorhergehenden Ansprüche, dadurch gekennzeichnet, daß die Durchmesser der Wärmeaustauschzonen I bzw. III sich zu dem Durchmesser der Reaktionszone II verhalten wie 1:1,5 bis 1:2,5.

**16.** Vorrichtung nach einem der vorhergehenden Ansprüche, dadurch gekennzeichnet, daß die Grafittiegel (9) mit einem Lochboden (10) versehen sind.

**17.** Vorrichtung nach einem der vorhergehenden Ansprüche, dadurch gekennzeichnet, daß der jeweils unterste Grafittiegel (11) auf einem dem Tiegelboden angepaßten hohlen Stahluntersatz (12) abgestützt ist, der an eine Gasversorgung (13) angeschlossen ist.

**18.** Vorrichtung nach einem der vorhergehenden Ansprüche, dadurch gekennzeichnet, daß die Grafittiegel (1, 9) dicht ineinandergeschachtelt sind.

## Claims

**1.** A method of thermal and/or reducing treatment of solid, granular and/or agglomerated charges at temperatures up to 3500 $^\circ$C in graphite crucibles connected in a circuit and travelling vertically through an oven chamber, characterised in that the charge is heated in a directly electrically heated vertical row of superposed graphite crucibles, the graphite crucibles moving downwards through a number of furnace zones and being surrounded by granular carbonaceous material flowing in counter-current.

**2.** A method according to claim 1, characterised in that the graphite crucibles travel through the following furnace zones in the direction of motion:
A zone for heat exchange between heated granular carbonaceous material and the graphite crucibles, which are cold and are to be heated up;
A zone of direct electric heating, where current is conveyed from the electrodes through the granular coke to the graphite crucibles, and

A zone for heat exchange between the heated graphite crucibles, which are to be cooled, and the granular coke, which is supplied when cold.

3. A method according to any of the preceding claims, characterised in that the reaction gas escaping in the reaction zone escapes through the porous walls of the graphite crucibles and is withdrawn upwards from the stream of granular carbonaceous material.

4. A method according to any of the preceding claims, characterised in that the thermal treatment is adjusted via the strength of current, the speed of advance of the row of crucibles and the flow rate of granular carbonaceous material.

5. A method according to any of the preceding claims, characterised in that the reaction gases are conveyed vertically upwards through the row of crucibles.

6. A method according to any of the preceding claims, characterised in that the interior of the crucibles is scavenged with a noble gas to prevent oxidation.

7. A method according to any of the preceding claims, characterised in that a carbothermic reaction occurs in the crucibles between the following substances:

| | Temperature range 0$^\circ$ C |
|---|---|
| $2B_2O_3 + 7C = B_4C + CO$ | 2000 - 2200 |
| $2Al_2O_3 + 9C = Al_4C_3 + 6CO$ | 1900 - 2100 |
| $SiO_2 + 3C = SiC + 2CO$ | 1900 - 2100 |
| $TiO_2 + 3C = TiC + 2CO$ | 2700 - 3200 |
| $ZrO_2 + 3C = ZrC + 2CO$ | 2800 - 3300 |
| $WO_3 + 4C = WC + 3CO$ | 2300 - 2500 |

8. A method according to any of the preceding claims, characterised in that a charge of the following materials in pieces or in coarse grains is introduced into the crucibles:

| | Temperature range 0$^\circ$ C |
|---|---|
| $B_2O_3 + 3C + N_2 = 2BN + 3CO$ | 2300 - 2500 |
| $Al_2O_3 + 3C + N_2 = 2AlN + 3CO$ | 1900 - 2100 |
| $3SiO_2 + 6C + 2N_2 = Si_3N_4 + 6CO$ | 1700 - 1800 |
| $2TiO_2 + 4C + N_2 = 2TiN + 4CO$ | 2500 - 2700 |
| $2ZrO_2 + 4C + N2 = 2ZrN + 4CO$ | 2500 - 2700, |

the nitrogen flowing vertically upwards through the crucibles.

9. A method according to any of the preceding claims, characterised in that in order to produce nitrides or carbonitrides in the cooling zone of the graphite crucibles, an excess of nitrogen is maintained in the crucibles.

10. A method according to any of the preceding claims, characterised in that a boride is formed in the crucibles in accordance with the following equation:

| | Temperature range 0$^\circ$ C |
|---|---|
| $TiO_2 + B_2O_3 + 5C = TiB_2 + 5CO$ | 2300 - 2600. |

11. A method according to any of the preceding claims, characterised in that simultaneous carburation and sintering are brought about in the crucibles in accordance with the following equations:

7

|  | Temperature range 0 °C |
|---|---|
| W + C = WC | 2000 - 2300 |
| 3W + 2C = W$_2$C + WC | 2700 - 3000. |

12. A method according to any of the preceding claims, characterised in that an indicator material comprising calcined oil coke, particle fraction 2 - 4 mm, is supplied to the graphite crucibles, and its electric resistivity is measured after the test and used for adjusting the temperature.

13. A device for thermal and/or reducing treatment of solid, granular and/or agglomerated charges at temperatures up to 3500 °C in graphite crucibles connected in a circuit and disposed vertically in a furnace chamber comprising a number of zones, characterised in that heating (1, 9) in the vertical row (2) is brought about by graphite electrodes (5, 6) disposed laterally at the periphery without touching the rows of graphite crucibles and in electric contact with the graphite crucibles (1, 9) via a granular carbonaceous material (4).

14. A device according to any of the preceding claims, characterised in that the electrodes (5, 6) are disposed in the central reaction zone II of the furnace chamber, and this zone is given a greater diameter than the adjacent heat-exchange zones I and III.

15. A device according to any of the preceding claims, characterised in that the diameter of the heat exchange zones I to III is in the ratio 1 : 1.5 to 1 : 2.5 to the diameter of the reaction zone II.

16. A device according to any of the preceding claims, characterised in that the graphite crucibles (9) are provided with a perforated tray (10).

17. A device according to any of the preceding claims, characterised in that the bottom graphite crucible (11) is mounted on a hollow steel support (12) matching the tray and connected to a gas supply (13).

18. A device according to any of the preceding claims, characterised in that the graphite crucibles (1, 9) are tightly fitted into one another.

## Revendications

1. Procédé de traitement thermique et/ou réducteur de charges solides, granulaires et/ou agglomérées à des températures jusqu'à 3500 °C dans des creusets en graphite réunis en une chaîne, qui traversent une chambre de four en sens vertical, caractérisé en ce qu'on chauffe la charge dans une barre verticale chauffée électriquement directement, constituée de creusets de graphite empilés l'un au-dessus de l'autre, les creusets de graphite se déplaçant de bas en haut à travers plusieurs zones de four et étant entourés par un matériau granuleux de carbone s'écoulant en sens inverse.

2. Procédé selon la revendication 1, caractérisé en ce que les creusets de graphite traversent dans le sens du déplacement les zones de four suivantes :
   zone pour l'échange thermique entre le matériau granulé chauffé de carbone et les creusets froids en graphite à chauffer,
   zone du chauffage direct par le courant avec transmission du courant par les électrodes par l'intermédiaire du granulé de coke aux creusets de graphite,
   zone pour l'échange thermique entre les creusets de graphite chauffés à refroidir et le granulé de coke ajouté froid.

3. Procédé selon l'une des revendications précédentes, caractérisé en ce que le gaz de réaction s'échappant dans la zone de réaction s'échappe par la paroi poreuse de creuset en graphite et on le soutire par le haut du courant de matériau de carbone granulé.

4. Procédé selon l'une des revendications précédentes, caractérisé en ce qu'on régule le traitement thermique par le choix de l'intensité de courant, la vitesse de passage de la barre de creusets et par le débit de matériau granulé de carbone.

5. Procédé selon l'une des revendications précédentes, caractérisé en ce qu'on fait passer les gaz de réaction de creuset de bas en haut en sens vertical à travers la barre.

6. Procédé selon l'une des revendications précédentes, caractérisé en ce qu'on balaye l'intérieur des creusets avec un gaz rare pour éviter l'oxydation.

7. Procédé selon l'une des revendications précédentes, caractérisé en ce qu'on réalise dans les creusets une réaction carbothermique des produits suivants :

|  | Domaine de température °C |
|---|---|
| $2B_2O_3 + 7C = B_4C + CO$ | 2000 - 2200 |
| $2Al_2O_3 + 9C = Al_4C_3 + 6CO$ | 1900 - 2100 |
| $SiO_2 + 3C = SiC + 2CO$ | 1900 - 2100 |
| $TiO_2 + 3C = TiC + 2CO$ | 2700 - 3200 |
| $ZrO_2 + 3C = RrC + 2CO$ | 2800 - 3300 |
| $WO_3 + 4C = WC + 3CO$ | 2300 - 2500 |

8. Procédé selon l'une des revendications précédentes, caractérisé en ce qu'on place dans les creusets une charge en morceaux ou en gros grains des substances suivantes :

|  | Domaine de température °C |
|---|---|
| $B_2O_3 + 3C + N_2 = 2BN + 3CO$ | 2300 - 2500 |
| $Al_2O_3 + 3C + N_2 = 2AlN + 3CO$ | 1900 - 2100 |
| $3SiO_2 + 6C + 2N_2 = Si_3N_4 + 6CO$ | 1700 - 1800 |
| $2TiO_2 + 4C + N_2 = 2TiN + 4CO$ | 2500 - 2700 |
| $2ZrO_2 + 4C + N_2 = 2ZrN + 4CO$ | 2500 - 2700 |

l'azote traversant les creusets de bas en haut en sens vertical.

9. Procédé selon l'une des revendications précédentes, caractérisé en ce que pour produire des nitrures ou des carbonitrures, on maintient dans la zone de refroidissement des creusets de graphite un excès d'azote dans les creusets.

10. Procédé selon l'une des revendications précédentes, caractérisé en ce qu'on réalise la formation de borure dans les creusets selon l'équation suivante :

|  | Domaine de température °C |
|---|---|
| $TiO_2 + B_2O_3 + 5C = TiB_2 + 5CO$ | 2300 - 2600 |

11. Procédé selon l'une des revendications précédentes, caractérisé en ce qu'on réalise simultanément carburation et frittage dans les creusets selon les équations suivantes :

|  | Domaine de température °C |
|---|---|
| $W + C = WC$ | 2000 - 2300 |
| $3W + 2C = W_2C + WC$ | 2700 - 3000 |

12. Procédé selon l'une des revendications précédentes, caractérisé en ce qu'on utilise dans les creusets de graphite un matériau indicateur en coke de pétrole calciné de granulométrie 2 - 4 mm, dont on mesure la résistance électrique spécifique selon l'essai et on l'utilise pour régler la température.

9

13. Dispositif de traitement thermique et/ou réducteur de charges solides, granulaires et/ou agglomérées à des températures pouvant atteindre 3500° C dans des creusets en graphite réunis en chaîne qui sont disposés verticalement dans une chambre de four constituée de plusieurs zones de four, caractérisé en ce que le chauffage (1,9) dans la barre verticale (2) se fait par des électrodes en graphite (5,6) ne touchant pas la barre de creusets en graphite disposés sur la périphérie, qui sont en contact électrique avec les creusets de graphite (1,9) par un matériau de carbure granuleux (4).

14. Dispositif selon l'une des revendications précédentes, caractérisé en ce qu'on dispose les électrodes (5,6) dans la zone médiane de réaction II de la chambre de four, et celle-ci a un diamètre supérieur à celui des zones contigües d'échange thermique I ou III.

15. Dispositif selon l'une des revendications précédentes, caractérisé en ce que les diamètres des zones d'échange thermique I ou III sont dans des rapports de diamètres à ceux des zones de réaction II de 1:1,5 à 1:2,5.

16. Dispositif selon l'une des revendications précédentes, caractérisé en ce que les creusets en graphite (9) sont munis de fonds percés (10).

17. Dispositif selon l'une des revendications précédentes, caractérisé en ce que chaque fois le creuset de graphite (11) le plus inférieur s'appuie sur un support (12) d'acier creux adapté au fond du creuset, qui est relié à une alimentation de gaz (13).

18. Dispositif selon l'une des revendications précédentes, caractérisé en ce qu'on emboîte l'un audessus de l'autre les creusets en graphite (1,9) de manière étanche.

Fig. 1

Fig. 2